# EUROPEAN PATENT APPLICATION

(11) **EP 4 543 027 A1**
(43) Date of publication of application: **23.04.2025**
(21) Application number: 24206792.4
(22) Date of filing: 15.10.2024
(51) Int. Cl.: H04N 21/81, H04N 19/597, H04N 19/70, H04N 21/845, H04N 21/854, H04N 21/235

(54) **METHOD, DEVICE, AND COMPUTER PROGRAM FOR IMPROVING HANDLING OF VOLUMETRIC DATA BIT-STREAM**

(30) Priority: 18.10.2023 GB 202315922; 24.11.2023 GB 202318009
(71) Applicant: CANON KABUSHIKI KAISHA, Tokyo 146-8501 (JP)
(72) Inventor: OUEDRAOGO, Naël, 35517 Cesson-Sévigné Cedex (FR); DENOUAL, Franck, 35517 Cesson-Sévigné Cedex (FR)
(74) Representative: Casalonga France

(57) **Abstract**

At least one embodiment of a method for encapsulating a volumetric data bit-stream into an ISOBMFF-based media file. After having obtained, from the volumetric data bit-stream, a first data container containing at least one parameter applying to the whole volumetric data bit-stream and containing a second data container comprising a segment of coded volumetric data, the segment of coded volumetric data comprising a sequence of one or more frames, a track comprising the at least one parameter in a metadata part of the track and comprising at least one sample, the data part of the at least one sample comprising coded volumetric data of at least one frame of the sequence of one or more frames, is generated and the generated track is encapsulated in the media file.

## Description

### FIELD OF THE DISCLOSURE

The present disclosure relates to a method, a device, and a computer program for improving handling of volumetric data bit-stream making it possible to select, transmit, store, and process volumetric data such as mesh data efficiently.

### BACKGROUND OF THE DISCLOSURE

There exist specifications that cover important aspects of volumetric video processing, in particular volumetric compression, streaming, decompression, and rendering, in particular that describes coding formats for volumetric content on a mesh basis.

Mesh-based compression comprises temporal compression wherein frames may be predicted from a reference key frame. A sequence of frames is divided into segments wherein a segment comprises a key frame (containing a geometry and a topology as described hereafter) and may comprise inter-frame data describing how the key frame morphs into non-key frames in the segment. When temporal compression is not used, a segment comprises a single frame, that is a key frame.

Regarding Mesh-based compression, there are two types of temporal compression encodings for the inter-frames or non-key frames, the Vertex Delta encoding and the Linear Blended Decomposition encoding. According to the Vertex Delta encoding, vertex data are encoded as offsets (vertex position offset and vertex normal offset) from a geometry of the key frame representing a base pose. The Vertex Delta encoding process is of low complexity. It is particularly adapted to short-length sequences. The Linear Blended Decomposition (linear blended skinning decomposition, or linear blend decomposition) encoding stores inter-frames as a collection of linear blended transforms where each vertex has some number of (default 4) blended transforms contributing to the encoding of the position from a base pose. The initial position or base pose of the vertices is encoded in the keyframe. The Linear Blended Decomposition is of higher complexity than the Vertex Delta encoding process, but it offers a higher compression efficiency.

According to some mesh compression algorithms or to some mesh encoding formats, mesh data are encoded in a nested set collection of containers. For example, the containers may describe coding parameters that apply to either the complete mesh sequence, a group of frames of the mesh sequence, or one mesh frame. A container starts with a 4CC (four-character code) parameter that signals the type of the container, that is followed by a size parameter signalling the length of the data coded in the container. A container may contain other boxes. In such a case, the size of the container includes the length of all the contained or nested boxes.

For example, a topmost container (e.g., a Mesh container) may describe general header information that applies to the whole media sequence. This topmost container aggregates one or more containers (or boxes or sub-boxes) that further describes the coded mesh data. Typically, it includes, in one or more nested containers, a group of coded mesh frames (or segment of frames). A segment groups a set of mesh frames that have common properties that make the compression efficient. One property may be that the frames share the same topology and geometry. In other words, the frame geometry (e.g., the number of vertices) and the connectivity (e.g., how the vertices form faces such as triangles) are the same for all the frames of the segment.

Another container may specify parameters that describe the segment data and also parameters indicating an offset in the coded bit-stream corresponding to the coding location of each segment.

For example, the Mesh container (e.g., a container having the '*mesh*' 4CC) may specify the following parameters:
a value representing a version number that identifies the syntax layout and features of the used bit-stream format;
the total number of segments coded in the bit-stream;
the number of units of time (also referred to as ticks) per second;
the number of units of time per frame (or per sample);
the total number of frames (or per sample) in the bit-stream; and
axis-aligned bounding box coordinates that indicate the minimum and maximum x, y, and z values for the box bounding the motion of the mesh vertices or of the objects over the whole sequence.

The Mesh container may also contain several flags indicating whether coding options are used. For example, the coding options may indicate the compression tools or algorithms used to compress the mesh data in the bit-stream. One of these flags may also be used to signal that the default coding options defined in the Mesh container can be override at each segment.

The Mesh container may comprise a Segment Table container (e.g., a container having the '*segt*' 4CC) that holds parameters about each segment of mesh frames. It is defined at a depth equal to one (i.e., it is a nested container of the topmost container) in the nested set collection of containers. The parameters present in this container may be the followings:
the number of frames (or samples) present in the segment;
the start time in units of time or ticks per second of the segment;
the end time in ticks of the segment;
the byte offset from the start of the mesh box corresponding to the first byte of the segment container;
the byte offset from the start of the Mesh container to the last byte of the segment container; and
axis-aligned bounding box coordinates that indicate the minimum and maximum x, y, z values for the box bounding the motion of the mesh vertices or of the objects over the segment.

The Mesh container may also comprise a Segment container (e.g., a container having the '*sgmt*' 4CC) containing the actual coded mesh data. In particular, it may contain coded data of one or more mesh frames. It is defined at a depth equal to one (i.e., it is a nested container of the topmost container) in the nested set collection of containers. In this container, the first frame is a key frame or base frame used as a reference for the inter prediction process of the other frames present in the segment (if any). The geometry or topology of the mesh should be stable within the segment. This means for example that the number of vertices and the connectivity remain the same within all frames of the segment.

The base frame data is stored in a Base box container and the zero or more inter predicted frames are all coded in the same inter-frame data container. The type (4CC) of the inter-frame container may reflect the type of the temporal compression scheme that is used.

For example, two compression schemes may be used. The first prediction method may be the Vertex Delta encoding scheme consisting in coding the new position of each vertex in the reference key frame as difference (or delta) from the vertices of the base frame. It makes it possible to represent the vertex coordinates of the inter-frame on a lower number of bits when the displacement of the mesh vertices between the inter-frames and the base frame is small. As disclosed above, this kind of compression approach is referred to as vertex delta compression (VTXD).

The second compression scheme may rely on a Smooth Skinning Decomposition with Rigid bones (SSDR) also known as Linear Blended Skinning Decomposition (LBSD) or Linear Blended Decomposition or Linear Blend Decomposition of the mesh within the segment. Each frame of the segment corresponds to one pose of an object. The base frame encodes a base pose of the mesh. In the Linear Blended Skinning model, a skeletal model is computed from the mesh to be encoded. This model is composed of multiple bones that are attached through joints. The mesh vertices (or skin) are associated to the skeletal bones. The poses are determined from an initial pose (base frame) and geometry transformations applied to the bones. The mesh vertex positions are computed from the initial base pose (i.e., an initial value) and a bone-vertex weight (or skin weight) map that constrains the positions of the vertices to the skeletal bone. As result, each new pose of the mesh is modelled by the skeletal transformations that deform the skin due to constraints imposed by the bone-vertex weight map.

The Segment container comprises a Base Box container or Base container that contains the mesh encoded data corresponding to the key frame. It is defined at a depth equal to two (i.e., it is a nested container of the container at depth 1) in the nested set collection of containers. When vertex delta encoding is used, the base container encodes an initial geometry (i.e. vertices positions and normals) and connectivity (the mesh faces for example the triangles). When the SSDR encoding is used, it contains the base pose of the mesh. In that case, the base container may be followed in the Segment container by a Skinning data container (as described hereafter) in particular when retargeting is used for the skeletal model. Retargeting makes it possible to reuse the LBSD model computed on a first mesh for another mesh with a different shape.

The base container encodes the number of vertices coded in the segment, and for each vertex: the vertex position (i.e., a vector of three coordinates), the vertex normals (i.e., a 3D vector), the UV position for texture mapping. It may also encode a number of faces and possibly the type of the faces (triangle, rectangle, line, etc.); and an array of the vertex indices that forms the face. For example, for triangle faces the array size is a multiple of 3. Each triplet of three consecutive values in the array corresponds to the indexes of the three vertices of a triangle.

The base container may also comprise an offset and a scaling parameter to apply to the encoded position of the vertices.

In addition to the base container, the segment container may also comprise one or more inter-frame containers. They are defined at a depth equal to two (i.e., they are nested containers of the container at depth 1) in the nested set collection of containers.

When the temporal compression scheme is the vertex delta encoding, a Vertex Delta Encoding Interframe container contains data encoding one or more inter predicted frames. Typically, this container encodes several parameters for each inter-frame (a number of frames equal to the number of frames indicated in the segment container minus 1). One parameter may be the position offsets of the vertices relatively to the previous frame. A second parameter may be the normal of the vertices. It is to be noted that the values of these parameters may be compressed using for example fixed point encoding strategy or any other encoding representation. As a result, several frames are encoded in the same Vertex Delta Encoding Interframe container.

When the temporal compression scheme that is used is the Linear Blended Skinning Decomposition (LBSD), an LBSD container (another container than the Vertex Delta Encoding Interframe container) is used. This LBSD container stores the skeletal or bones transform data for several frames. It is defined at a depth equal to two (i.e., it is a nested container of the container at depth 1) in the nested set collection of containers.

Within a segment, one or more LBSD containers may be defined so that the sum of the number of frames encoded in the LBSD containers corresponds to the number of frames encoded in the segment container minus 1 (i.e. minus the key frame encoded in the Base container).

The LBSD container encodes the number of frames that is covered by the LBSD container and the number of bones defined for the Linear Blended Skinning Decomposition of the mesh. Then, for each frame covered by the LBSD container, and for each bone, a 3D vector indicating the position of bone transform origins and a 4D vector specifying the bone transform as unit length quaternions are encoded.

An LBSD container may also define a sub-container to store the skin weight map: the Skinning data container maps vertices of the base frame (or base pose) with one or more bones (typically four bones) and store a weight value to each couple of vertices and bones, as determined by the LBS decomposition operation. The LBSD container is defined at a depth equal to three (i.e., it is a nested container of the container at depth 2) in the nested set collection of containers when encoded in an LBSD container. When the Skinning data container is used for retargeting, it is defined at a depth equal to two (i.e., it is a nested container of the container at depth 1) in the nested set collection of containers.

For example, the Skinning data container encodes first the number of bones per vertex. This value indicates the number of encoded bone indices and the number of encoded weights associated with each vertex. The container may encode successively these index and weight values for each vertex in the same order as in the base frame container.

The mesh coding format may further make it possible to define properties associated with each vertex. For example, a user vertex properties container may encode the number of properties associated with each vertex. The formats of the user properties are registered in a predetermined table. For example, the table may indicate an unsigned integer with 8-bits, 16-bits, or 32-bits length coding representation or a float represented on 16-bits or 32-bits, or even a vector of three 32-bits integers, etc.

The user vertex properties container may then indicate the format of each property by coding the index of the format in the table of registered formats. Finally, the container encodes successively the values of the properties for each vertex of the mesh.

The user vertex properties container may be stored in the base frame or inter-frame containers or directly in the segment container when the user properties are static for all the frames coded in the segment. As a result, it can be defined at a depth level equal to 2 or 3 in the nested set collection of containers.

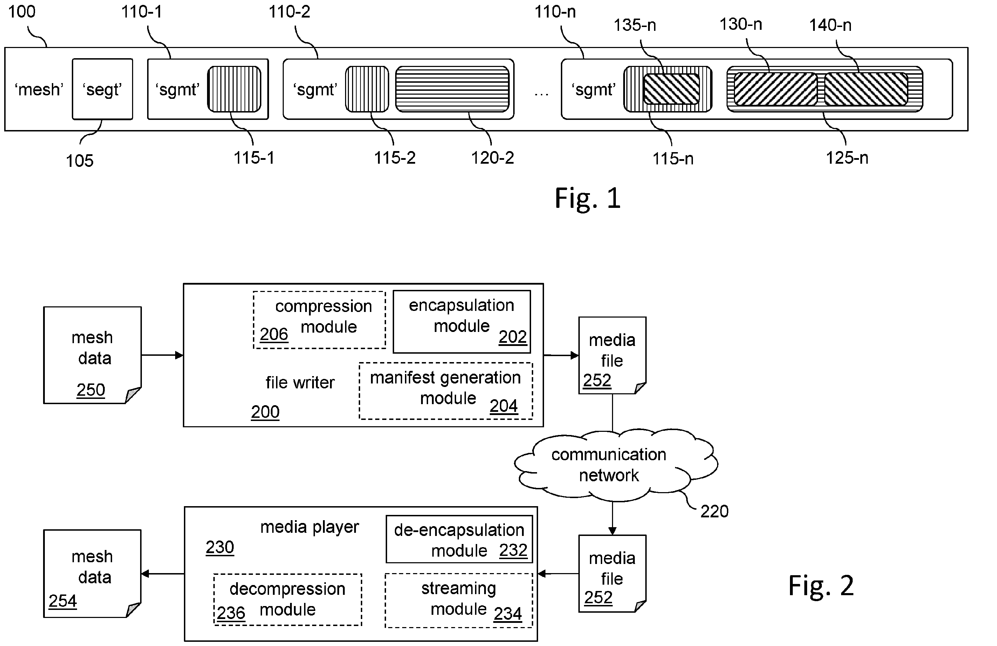

**Figure 1** illustrates an example of a bit-stream comprising mesh data encoded according to an existing specification.

According to this example, container 100 is a '*mesh*' container that corresponds to the topmost container that aggregates all the other containers or boxes. As illustrated, Mesh container 100 comprises Segment Table container 105 ('*segf* container) followed by several Segment containers 110-1 to 110-n ('*sgmf*' container). The first segment container comprises a single frame that is thus a key frame stored in a Base container 115-1 ('base' container also referred to as base frame container). Segment containers 110-2 and 110-n encode more than one frame and thus contains several sub-containers. For the sake of illustration, segment container 110-2 comprises base container 115-2 that encodes a key frame used for temporal compression and VTXD container 120-2 that encodes several inter mesh frames (for example 29 frames). VTXD containers may also be referred to as inter-frame containers. Still for the sake of illustration, segment container 110-n comprises base container 115-n that encodes a key frame used for temporal compression and LBSD container 125-n that also encodes several inter-frames. According to the illustrated example, LBSD container 125-n contains Skinning data container 130-n that is needed for LBSD prediction. LBSD containers may also be referred to as inter-frame container. Container 135-n and 140-n are optional user vertex properties containers.

As apparent from Figure 1, the nested set collection structure makes it difficult to access a given frame efficiently. Indeed, the samples or mesh frames are buried in the nested set of containers and, as a result, a media sample cannot be represented as byte ranges of decodable and extractible structures. Therefore, there is a need to improve the handling and storage of volumetric data, in particular mesh data, for efficient transmission, decoding, and random access.

### SUMMARY OF THE DISCLOSURE

The present disclosure has been devised to address one or more of the foregoing concerns.

According to a first aspect of the disclosure, there is provided a method of encapsulating a volumetric data bit-stream into an ISOBMFF-based media file, the method comprising
obtaining, from the volumetric data bit-stream, a first data container containing at least one parameter applying to the whole volumetric data bit-stream and containing a second data container comprising a segment of coded volumetric data, the segment of coded volumetric data comprising a sequence of one or more frames;
generating a track comprising the at least one parameter in a metadata part of the track and comprising at least one sample, a data part of the at least one sample comprising coded volumetric data of at least one frame of the sequence of one or more frames; and
encapsulating the generated track in the media file.

Accordingly, the method of the disclosure makes it possible to encapsulate volumetric data in a media file conforming to ISOBMFF, that can be handled efficiently for transmission, storage, random access, etc.

According to some embodiments, the data part of the at least one sample comprises a key frame containing geometry information.

Still according to some embodiments, the data part of the at least one sample comprises at least one inter-frame.

Still according to some embodiments, the volumetric data bit-stream comprises coded mesh data.

Still according to some embodiments, the metadata part of the track further comprises an indication of a volumetric encoding format of the at least one inter-frame.

Still according to some embodiments, the method further comprises obtaining the coded volumetric data of the at least one frame of the sequence of one or more frames from a third data container of the volumetric data bit-stream, the third data container being contained in the second data container.

Still according to some embodiments, the third data container comprises the indication of the volumetric encoding format of the at least one inter-frame.

Still according to some embodiments, the data part of the at least one sample comprises coded volumetric data of all the frames of the sequence of one or more frames.

Still according to some embodiments, the track further comprises subsample information in the metadata part, the subsample information describing at least one of the following:
a type of each frame of the sequence of one or more frames in a sample and
a number of frames in the sequence of one or more frames in a sample.

Still according to some embodiments, the segment of coded volumetric data further comprises user vertex properties and the user vertex properties are encapsulated in a sample of another track.

Still according to some embodiments, the segment of coded volumetric data further comprises vertex skinning data and the vertex skinning data are encapsulated in a sample of another track.

Still according to some embodiments, the at least one parameter applying to the whole volumetric data bit-stream is encoded in a sample entry of the track.

Still according to some embodiments, at least one parameter applying to a plurality of samples is encoded in a sample group of the track.

According to a second aspect of the disclosure, there is provided a method of generating a volumetric data bit-stream from an ISOBMFF-based media file, the method comprising:
obtaining, from the media file, a track comprising at least one parameter in a metadata part of the track, the at least one parameter applying to the whole volumetric data bit-stream, the track further comprising at least one sample, a data part of the at least one sample comprising coded volumetric data of at least one frame of a sequence of one or more frames, the sequence of one or more frames pertaining to a segment of coded volumetric data;
generating, from at least one sample, a first data container comprising the segment, the segment comprising the coded volumetric data of all the frames of the sequence of one or more frames;
generating a second data container containing the at least one parameter and the generated first data container and;
generating the volumetric data bit-stream, the volumetric data bit-stream comprising the second data container.

Accordingly, the method of the disclosure makes it possible to process volumetric data encapsulated in a media file conforming to ISOBMFF, that can be handled efficiently for transmission, storage, random access, etc.

According to some embodiments, the coded volumetric data of at least one frame of the sequence of one or more frames comprises a key frame containing geometry information.

Still according to some embodiments, the coded volumetric data of at least one frame of the sequence of one or more frames comprises at least one inter-frame.

Still according to some embodiments, the volumetric data bit-stream comprises coded mesh data.

Still according to some embodiments, the first data container comprises an indication of a volumetric encoding format of the at least one inter-frame, the indication being generated from the metadata part of the track.

Still according to some embodiments, the method further comprises:
generating a third data container comprising the coded volumetric data of at least one frame of the sequence of one or more frames, the third data container being contained in the first data container.

Still according to some embodiments, the third data container comprises the indication of the volumetric encoding format of the at least one inter-frame.

Still according to some embodiments, the at least one sample comprises the coded volumetric data of all the frames of the sequence of one or more frames.

Still according to some embodiments, generating the third data container comprises obtaining data indicating
the type of each frame of the sequence of one or more frames in a sample and/or
a number of frames in the sequence of one or more frames in a sample,
the indicating data being obtained from subsample information of the metadata part of the track.

Still according to some embodiments, generating the first data container further comprises obtaining, from a sample of another track, coded volumetric data corresponding to user vertex properties.

Still according to some embodiments, generating the first data container further comprises obtaining, from a sample of another track, coded volumetric data corresponding to vertex skinning data.

Still according to some embodiments, the at least one parameter applying to the whole volumetric data bit-stream is determined from a sample entry of the track.

Still according to some embodiments, at least one parameter applying to a plurality of samples is determined from a sample group of the track.

According to other aspects of the disclosure, there is provided a processing device comprising a processing unit configured for carrying out each step of the methods described above. The other aspects of the present disclosure have optional features and advantages similar to the first and second above-mentioned aspects.

At least parts of the methods according to some embodiments of the disclosure may be computer implemented. Accordingly, some embodiments of the present disclosure may take the form of an entirely hardware embodiment, an entirely software embodiment (including firmware, resident software, micro-code, etc.) or an embodiment combining software and hardware aspects that may all generally be referred to herein as a "circuit", a "module", or a "system". Furthermore, some embodiments of the present disclosure may take the form of a computer program product embodied in any tangible medium of expression having computer usable program code embodied in the medium.

Since some embodiments of the present disclosure can be implemented in software, some embodiments of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device, and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Embodiments of the disclosure will now be described, by way of example only, and with reference to the following drawings in which:
**Figure 1** illustrates an example of a bit-stream comprising mesh data encoded according to an existing specification;
**Figure 2** illustrates an example of a system wherein some embodiments of the disclosure may be implemented;
**Figure 3** illustrates a first example of steps of a process for encapsulating, into a single volumetric track, a mesh data bit-stream forming a set of nested containers, according to some embodiments of the disclosure;
**Figure 4** illustrates an example of a media file generated by an encapsulation module carrying out the step illustrated in Figure 3 from the mesh bit-stream illustrated in Figure 1;
**Figure 5** illustrates a first example of steps of a process for de-encapsulating (or parsing) a media file to generate a mesh data bit-stream forming a set of nested containers, according to some embodiments of the disclosure;
**Figure 6** illustrates a second example of steps of a process for encapsulating, into a single volumetric track, a mesh data bit-stream forming a set of nested containers, according to some embodiments of the disclosure;
**Figure 7** illustrates an example of a media file generated by an encapsulation module carrying out the step illustrated in Figure 6 from the mesh bit-stream illustrated in Figure 1;
**Figure 8** illustrates a second example of steps of a process for de-encapsulating (or parsing) a media file to generate a mesh data bit-stream forming a set of nested containers, according to some embodiments of the disclosure; and
**Figure 9** schematically illustrates an example of a processing device configured to implement at least one embodiment of the present disclosure.

### DETAILED DESCRIPTION OF THE DISCLOSURE

For the sake of illustration, some embodiments of the disclosure are directed to the packaging, storage, or encapsulation of one or more volumetric data bit-streams in a media file conforming to ISO Base Media File Format, ISO/IEC 14496-12 or its extensions or derived specifications. The media file may be later used for reading from a storage medium or may be used by a streaming server for adaptive streaming, for example over HTTP like DASH (Dynamic Adaptive Streaming over HTTP) or HTTP Live Streaming (HLS).

According to some embodiments of the disclosure, volumetric data provided in a bit-stream are decoded and encapsulated in an ISO Base Media file to be handled efficiently according to particular requirements.

For the sake of illustration, the following examples are based on mesh data encoded in a nested set collection of containers. However, in more general terms, the methods of the disclosure apply to volumetric data encoded in a nested set collection of containers.

Figure 2 illustrates an example of a system wherein some embodiments of the disclosure may be implemented. More precisely, some steps of some embodiments of the disclosure may be carried out in a media file writer such as media file writer 200, in a media player such as media player 230, or in both.

As illustrated, media file writer 200 takes point cloud data (or volumetric data), such as mesh data 250, as input. The point cloud or mesh data may be received as uncompressed raw data or as a compressed bit-stream, for example a compressed bit-stream format that consists in a nested set collection of data containers, as illustrated in Figure 1. Media file writer 200 may be used to serve media files, for example using a protocol for dynamic adaptive streaming on HTTP like DASH (Dynamic Adaptive Streaming over HTTP) or HTTP Live Streaming. These protocols require a streaming manifest, such as a Media Presentation Description (MPD), or a playlist.

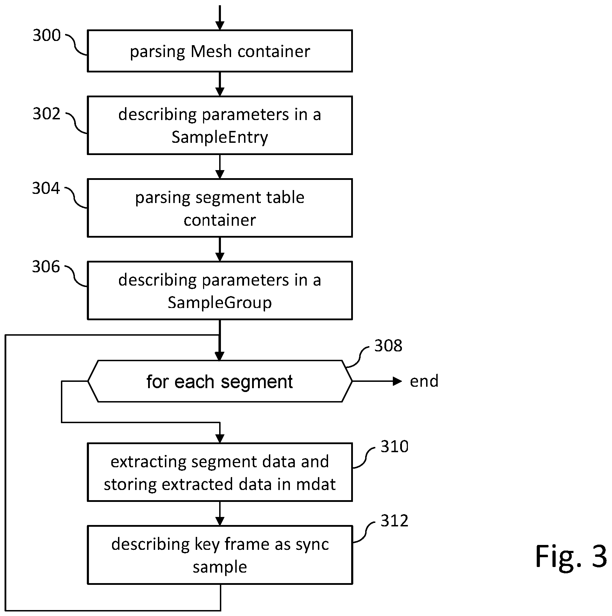

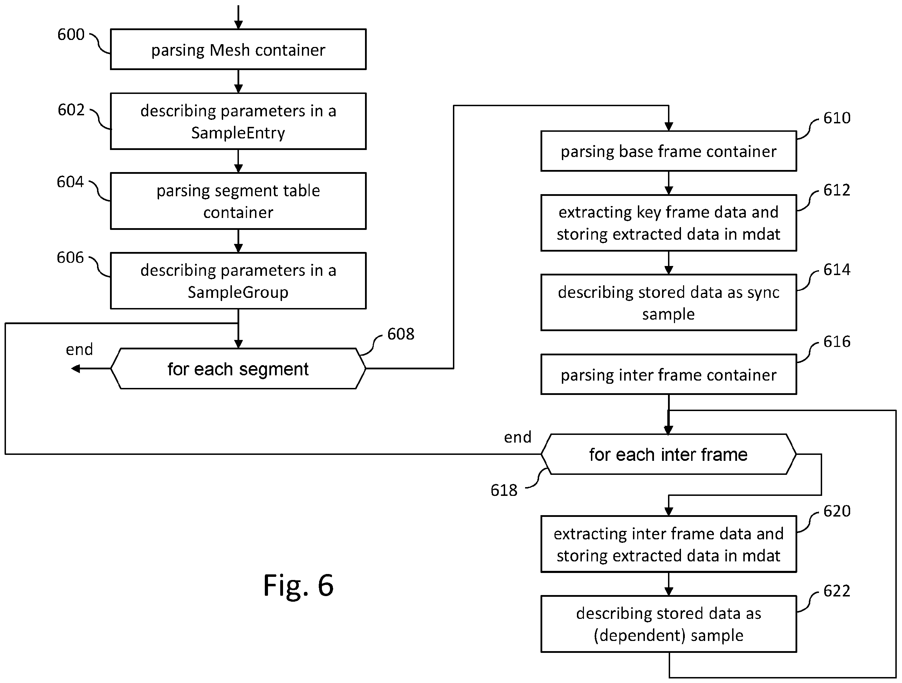

Media file writer 200 comprises encapsulation module 202 to encapsulate received point cloud or mesh data according to an ISOBMFF-based format, for interoperability purposes, in order to generate a media file like media file 252 that may be stored for later use by a player or by an image analysis tool or that may be transmitted to a media player or a streaming client. Examples of the encapsulation process that may be carried out in encapsulation module 202 are described in reference to Figures 3 and 6.

When used to stream encapsulated media content, media file writer 200 may contain a manifest generation module such as manifest generation module 204. Media file writer 200 may also contain a compression module such as compression module 206 to compress the input point cloud or mesh data into a compressed bit-stream format that consists in a nested set collection of data containers.

Media file writer 200 may be controlled and parameterized by a user, for example through a graphical user interface or by an application, for example by application code or scripting.

Media file 252 may consist in a single media file or in a set of media segment files, for example as ISOBMFF segments (i.e., ISO base media file containing one or more segments). The media file may be a fragmented file, for example for live acquisition or capture and encapsulation or for live (or low-latency) streaming. It may comply with the ISOBMFF standard or to standard specifications derived from ISOBMFF.

Media file writer 200 may be connected, via a network interface (not represented), to a communication network 220 to which may also be connected, via a network interface (not represented), media player (or reader) 230 comprising a de-encapsulation module 232.

It is observed that media player (or reader) 230 may be a streaming client, the streaming features being handled by a streaming module like streaming module 234, for example implementing a DASH or HLS client, for requesting a media file such as media file 252 and for adapting the transmission parameters.

Media file 252 may be read from a storage location or streamed using the streaming module 234. The data may be read at once or by chunks, segments, or fragments and provided to de-encapsulation module (or parsing module) 232.

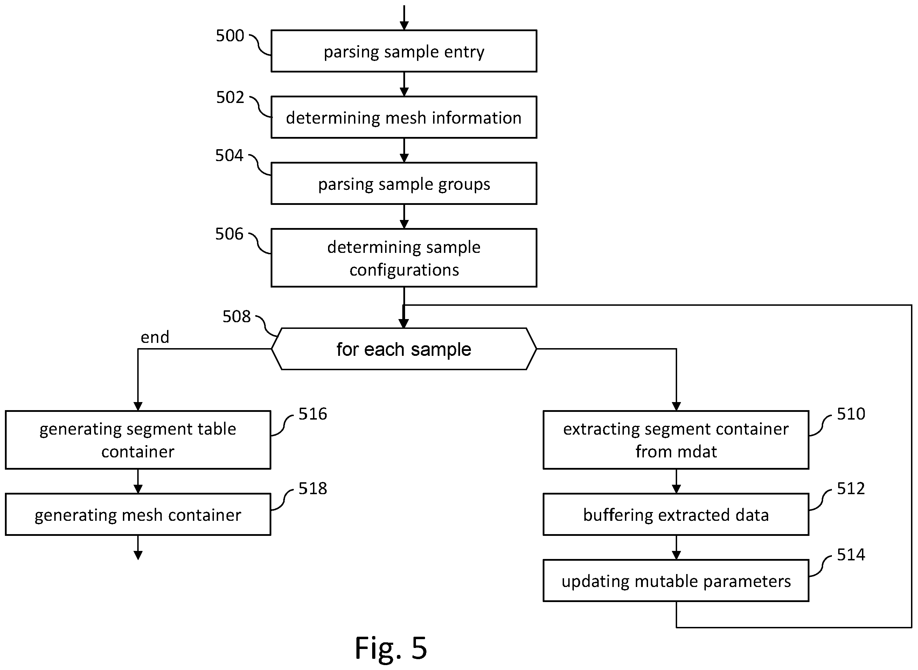

De-encapsulation module (or parsing module) 232 extracts the encapsulated mesh frame data or a subset of the encapsulated mesh frame data, depending on the player configuration or on the choices from a user or on the parameters of an application using the media player. The extracted mesh data may result in a bit-stream such as a bit-stream complying with a format that consists in a nested set collection of data containers (e.g., as illustrated in Figure 1). In such a case, the bit-stream is provided to a decompression module (an external decompression module or an internal decompression module, e.g. internal decompression module 236) for the reconstruction of the mesh data 254 for usage by a user or application (for example visualization or analysis). An example of the parsing process that is carried out by the de-encapsulation module (or parsing module) 232 is described with reference to Figure 5.

A media player may be embedded in a display device (e.g. a smartphone, tablet, PC, vehicle with multimedia screen, Head Mounted Display, connected glasses, etc.) or in software tools in a studio for volumetric data production.

### Encapsulation according to a first embodiment

According to some embodiments of the disclosure, the mesh data bit-stream is encapsulated in a media file of the ISOBMFF type so as to store top-level containers data of the bit-stream in a metadata part of a track and low-level containers data in a data part. As a result, there is a clear separation between containers handling description of the coded data and the one containing actual coded data.

**Figure 3** illustrates a first example of steps of a process for encapsulating, into a single volumetric track, a mesh data bit-stream forming a set of nested containers, according to some embodiments of the disclosure. These steps may be carried out in the encapsulation module 202 in Figure 2. The obtained track, called a "Mesh track" may be an ISOBMFF track with handler type set to 'volv', indicating a volumetric visual track. This track allows carrying Mesh-encoding Format in an ISOBMFF compliant way, thus facilitating its use with MPEG DASH or HTTP Live Streaming for adaptive streaming.

As illustrated, a first step is directed to parsing the Mesh container (step 300). During this step, the items of information coded in the Mesh container (except the sub container contained in the box), that represent the mesh sequence, are extracted and the corresponding parameters (i.e., Mesh container parameters) are obtained.

It is noted that a distinction may be made between two types of parameters: a first type for mutable parameters whose value may vary when random accessing the bit-stream and a second type for immutable parameters whose value is static for the whole sequence and remains unchanged when random accessing the bit-stream. Examples of mutable parameters are the number of segments coded in the sequence and the total number of frames coded in the mesh sequence. The version parameter, timing information such as the number of units of time (or ticks) per second and the number of units of time per frame (or per sample), and axis-aligned bounding box coordinates are immutable parameters.

Next, the Mesh container parameters, in particular the immutable parameters, are described in a sample entry (step 302). Defining the immutable parameters in a sample entry allows a de-encapsulation module (e.g., de-encapsulation module 232 in Figure 2) to determine the coding configuration and version of the mesh bit-stream, making it possible to initialize the mesh decompression module to be used (e.g., mesh decompression module 236 in Figure 2).

According to particular embodiments, the mutable parameters are not described in any metadata box and are generated by the de-encapsulation module, as described with reference to Figure 5. According to other embodiments, the mutable parameters are provided in a metadata box describing samples, e.g. sample entry as a maximum number of segments or a maximum number of frames present in the mesh sequence.

A MeshConfigurationBox may be used to carry a Mesh decoder configuration record. To that end, a MeshConfigurationBox should contain a MeshDecoderConfigurationRecord. This box derives from FullBox and hence contains a version field. The version field of the Fullbox is for example set equal to 0. Readers should not attempt to decode this box or the referenced mesh-encoding sequence if the version number is unrecognized.

Compatible extensions to this box may extend it without needing any change of the version code. File readers should be prepared to ignore unrecognized data beyond the definition of the data they understand.

The MeshConfigurationBox, the MeshDecoderConfigurationRecord (contained in the MeshConfigurationBox), and the Vector3f (contained in the MeshDecoderConfigurationRecord) may have the following syntaxes according to the version of the MeshConfigurationBox box, for example version 0. Incompatible changes to the box may be indicated by a change of version number. 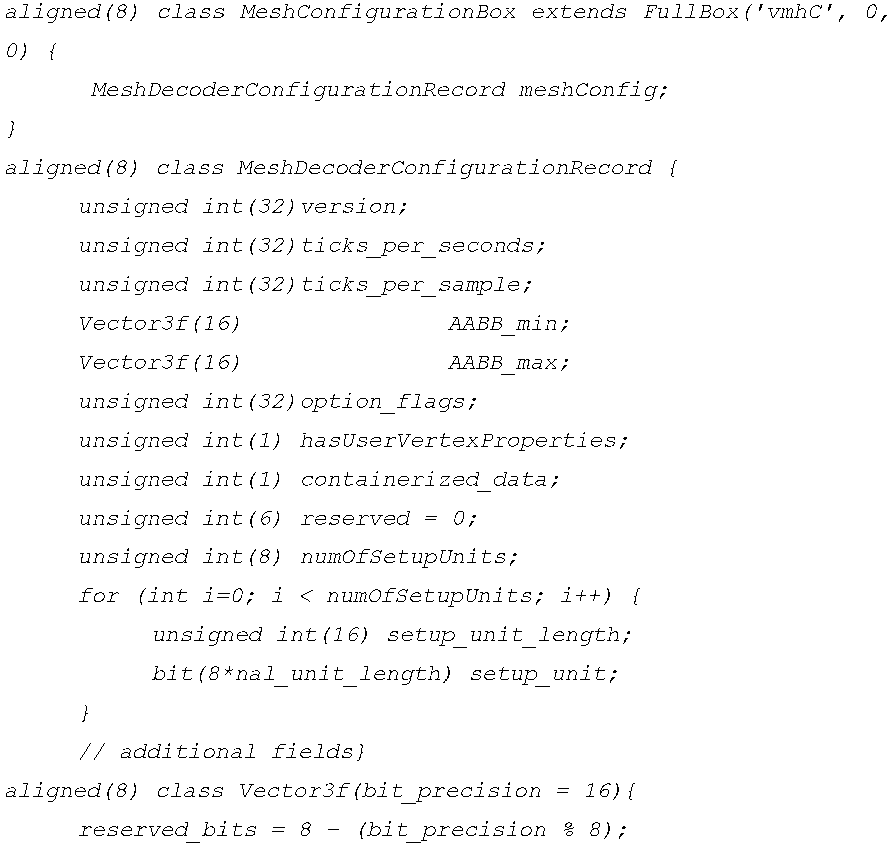 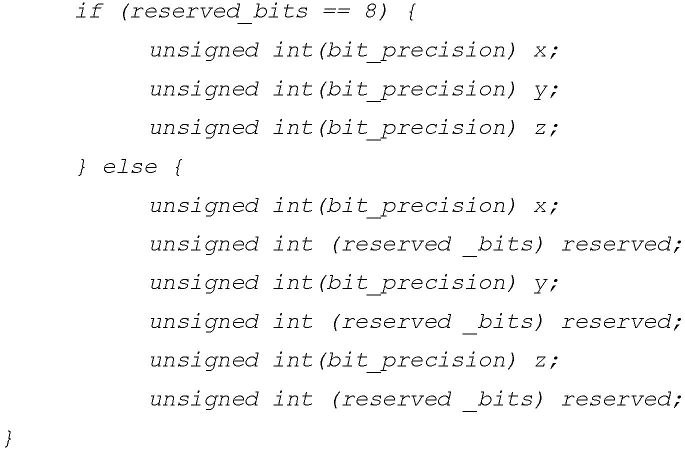 with the following semantics:
*Vector3f* structure provides the x, y, and z coordinate values of a 3D point. The x, y, and z values may be expressed in binary floating-point format with a n-bit precision wherein n is equal to the bit_precision parameter (equal to 16 by default),
*MeshDecoderConfigurationRecord or meshConfig* provides configuration information for the mesh bit-stream. It contains the items of information for the configuration and initialization of the mesh bit-stream decoder, for example the following items of information:
   *version* is a value representing a version number that identifies the syntax layout and features of the mesh codec format,
   *ticks_per_seconds* is the number of units of time (or ticks) per second,
   *ticks_per_sample* is the number of units of time per frame (or per sample),
   *AABB_min* indicates the minimum x, y, and z values of the axis-aligned bounding box coordinates of the box bounding the motion of the mesh vertices or of the considered objects over the whole sequence,
   *AABB_max* indicates the maximum x, y, and z values of the axis-aligned bounding box coordinates of the box bounding the motion of the mesh vertices or of the considered objects over the whole sequence,
   *option_flags* is a bit-field of option flags for the encoding configuration used for the segment. It corresponds to the option_flags parameter present in the Mesh container of the Mesh bitstream,
   *hasUserVertexProperties* is a flag signalling whether user vertex properties are signalled, for example as follows:
      when it is set to 0, it indicates that the Mesh bitstream does not contain User Vertex Properties container.
      when it is set to 1, it indicates that the Mesh bitstream may or may not contain User Vertex Properties container.
   *containerized_data* indicates whether the sample contains data that are already in a Mesh bit-stream container, for example as follows
      when containerized_data is set to 1, it indicates that the sample contains data that is already in a Mesh bit-stream container. When containerized_data is set to 1, the value of subsample_containerized_data value in the codec_specific_parameters of a SubSamplelnformationBox with flags = 0 is constrained to be equal to 1 and
      when containerized_data is set to 0, it indicates that the sample is not in a Mesh bit-stream container. When containerized_data is set to 0, a SubSamplelnformationBox with flag=0 may be present in the track. In this case, the subsamples may or may not contain data that are in a Mesh bit-stream container according to the value of subsample_containerized_data value of the codec_specific_parameter.
   this parameter is optional and may be inferred according to some embodiments of the disclosure,
The following three parameters are optional and may be inferred according to some embodiments of the disclosure.
   *numOfSetupUnits* indicates the number of setup units included in the configuration record,
   *setup_unit_length* indicates the length in bytes of the setup unit, and
   *setup_un*i*t* contains a Mesh bit-stream container (e.g. 'xopt' Box).

The MeshDecoderConfigurationRecord may further embed containers of the Mesh bit-stream "as-is" in the setup unit (stored in the setup_unit field) of the record. For example, the mesh bit-stream may comprise optional containers that define a set of parameters for the configuration of the decoding module. According to particular embodiments, one or more Extended Option containers (e.g. 'xopt' Box) may be present in the mesh bit-stream. The MeshDecoderConfigurationRecord may then provide the Extended Options container data at the end of the MeshDecoderConfiguration using an ISOBMFF Box container.

In a variant, the ticks_per_seconds parameter is not present and may be inferred from the media timescale parameter as defined in the MediaHeaderBox of the Mesh Track (i.e., the track of the media file wherein the mesh bit-stream is encapsulated).

In another variant, the ticks_per_sample parameter is not present and may be inferred from the sample_delta value coded in the TimeToSampleBox. In a particular embodiment, the sample_delta value should be the same for all the samples of the mesh track. When it is not the case, the ticks_per_sample is set to the smallest value (that is not null) of the sample_delta in the TimeToSampleBox.

In another variant, the version may be also representative of a profile for the mesh format. Additional structures or parameters may further indicate tier and level values for the mesh format. Tiers and levels are a set of constraints imposed on the mesh format, the level constraints being defined within a tier.

The following syntax is an example of a Mesh bit-stream sample entry that may be used to describe the immutable parameters of the Mesh container in the config parameter of type MeshConfigurationBox. The type of the VolumetricMeshSampleEntry may be '*vmsh*' or *'vms1'* for example.

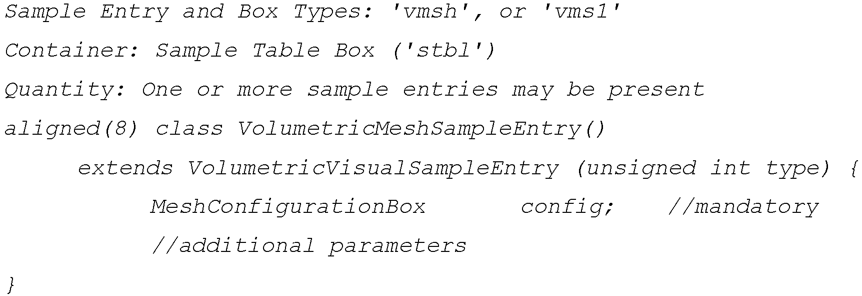

The VolumetricMeshSampleEntry is defined in the Sample Table Box ('*stbl*') container. The presence of one or more '*vmsh*' or *'vms1'* sample entry may be mandatory in Mesh track.

A Mesh sample entry may be defined as a sample entry that has sample entry type equal to *'vmsh'* or *'vms1'.* A Mesh sample entry should contain a MeshConfigurationBox. Other optional boxes may be included.

When the sample entry is of the '*vms1*' type, Extended Option container (xopt), if any, should be in the setup_unit array of the MeshDecoderConfigurationRecord. When the sample entry is of the '*vmsh*' type, Extended Option container (xopt) may be in the setup_unit array of the MeshDecoderConfigurationRecord or in the sample of the Mesh bitstream track. In a variant, the setup_unit array may further specify other Mesh container such as the Segment Table Container to provide the configuration of the complete Mesh bit-stream to initialize the Mesh Segment and Mesh frame buffers of the decoder.

When the sample entry is of the *'vmsh'* or *'vms1'* type, the samples that reference the sample entry containing this MeshDecoderConfigurationRecord mesh sequence should comprise data corresponding to Mesh base frame data or Interframe data, and should not comprise any of the Mesh data container, the Segment Table Container, or Segment Mesh Data.

The compressorname in the base class VolumetricVisualSampleEntry indicates the name of the used compressor, the value "\013Mesh Coding" being recommended (\013 is 11, the length of the string in bytes).

In a variant, the Bounding Box parameters AABB_min and AABB_max from MeshDecoderConfigurationRecord() may be specified in the additional parameters of the sample entry. Indeed, these parameters may not be required to initialize the decoder and thus, could be removed from the configuration record to reduce the size of the configuration record.

Next, the encapsulation module parses the Segment Table container (step 304). As for the Mesh container, the parameters stored in the Segment Table container may be classified into two types. The first type of parameters includes parameters that may be inferred from the ISOBMFF sample description. According to some embodiments, it corresponds to the parameters that specify the number of frames (or samples) present in the segment, the start time in units of time or ticks per second of the segment, the end time in ticks of the segment, the byte offset from the start of the mesh box corresponding to the first byte of the segment container, and the byte offset from the start of the mesh box corresponding to the last byte of the segment container. Indeed, ISOBMFF provides timing information related to each sample of the bit-stream. In addition, the byte address of the sample in the media data part of the ISOBMFF is indicated in Sample to size box.

The other parameters such as the axis-aligned bounding box coordinates that bound the motion of the objects over the segment are provided in a dedicated box that is then associated with one or more samples. The dedicated box may be signalled as a sample group (step 306).

The following syntax is an example of Mesh Segment '*msgt*' sample group that may signal the Bounding Box parameters and optionally the number of mesh frames comprised in each sample: 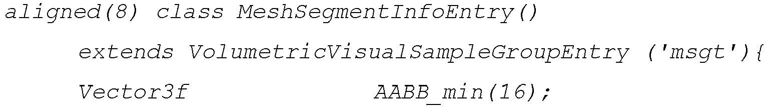 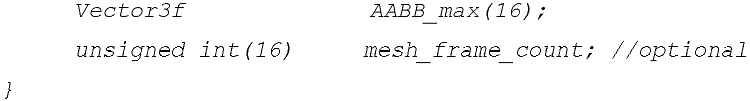 with the following semantics:
*AABB_min* indicates the minimum x, y, and z values of the axis-aligned bounding box coordinates of the box bounding the motion of the mesh vertices or of the considered objects over all the samples mapped by the sample group,
*AABB_max* indicates the maximum x, y, and z values of the axis-aligned bounding box coordinates of the box bounding the motion of the mesh vertices or of the considered objects over all the samples mapped by the sample group, and
*mesh_frame_count* is the number of mesh frames present in each sample mapped by the sample group.

Next, the encapsulation module continues with a processing loop that is applied for each segment container present in the bit-stream (step 308). As illustrated, each iteration of the loop starts by step 310 that aims at extracting the segment container from the mesh bit-stream and storing it in the media data part of the file. As a result, the media data part of the file format includes only the segment containers of the compressed mesh bit-stream and not the Mesh container nor the segment table container. The key frames are described as sync sample (step 312).

The de-encapsulation is in charge of reconstructing these containers from the signalling (metadata boxes) provided in the media file.

It is observed here that on a general basis, the immutable parts of the mesh bit-stream are preferably stored in the metadata part of the media file like in the '*moov*' box and the track box or the *'stbl'* box while the mutable parts of the mesh bit-stream may rather be declared in metadata boxes describing properties for a sample, for a group of samples, or for subsamples (i.e. parts of a sample).

For fragmented files, immutable parts on a given time range may be declared in metadata boxes describing the whole movie or the movie fragments or the whole track or the track fragments. Mutable parts may be described in metadata boxes describing a sample, a group of samples, or a run of samples (i.e. a set of contiguous samples).

For segmented files (when the media presentation is split into one or more segment files, e.g. CMAF segments or CMAF Fragments), possibly with more than one movie fragments (e.g. CMAF chunks), immutable parts for a segment may be declared in metadata boxes describing the whole movie or track, or describing movie fragments or track fragments. Mutable parts may be described in metadata boxes describing a track fragment, a sample, or a run of samples (i.e. a set of contiguous samples).

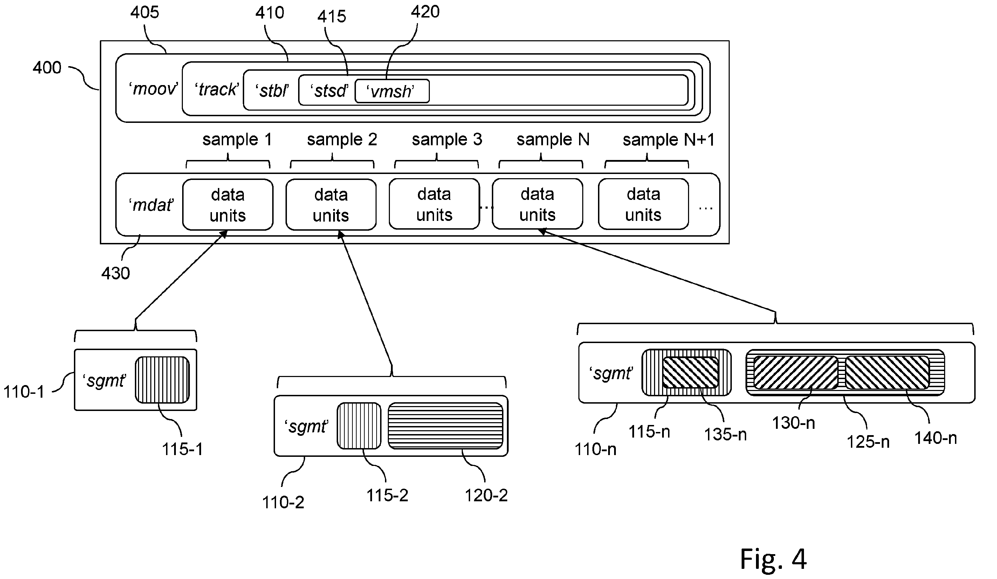

**Figure 4** illustrates an example of a media file generated by an encapsulation module carrying out the step illustrated in Figure 3 from the mesh bit-stream illustrated in Figure 1.

As illustrated, media file 400 contains two parts: the metadata part 405 (the '*moov*' box and its sub-boxes according to ISOBMFF, it may be also the movie and track fragments boxes that are not illustrated in figure 4) and the media data part 430 (the '*mdat*' box according to ISOBMFF). Metadata part 405 describes the samples stored in the media data part 430. According to this example, each sample of the media file includes a segment of one or more frames of the mesh bit-stream.

Metadata part 405 contains a track 410 that describes the sample characteristics in the *'stbl'* box. In particular, it comprises a *'vmsh'* sample entry referenced 420 in the SampleDescription box '*stsd*' referenced 415 that signals the immutable parameters of the Mesh container. The SampleTableBox *'stbl'* further comprises a SampleGroupDescriptionBox (not represented) that may comprise one or more '*msgt*' sample group description entries.

Media data part 430 comprises, for each sample, the data corresponding to Segment containers (including it sub containers) of the mesh bit-stream. For example, sample 1 comprises the data corresponding to segment container 110-1, that is to say the data of the key frame stored in its base container 115-1. Likewise, sample 2 comprises the data corresponding to segment container 110-2, that is to say the data of the key frame stored in its base container 115-2 and the data of the inter-frames encoded in VTXD container 120-2. Similarly, sample N comprises the data corresponding to segment container 110-n, that is to say the data of the key frame stored in base container 115-n and the data of the inter-frames encoded in LBSD container 125-n.

### De-encapsulation according to the first embodiment

**Figure 5** illustrates a first example of steps of a process for de-encapsulating (or parsing) a media file to generate (as output bitstream) a mesh data bit-stream forming a set of nested containers, according to some embodiments of the disclosure. These steps may be carried out in the de-encapsulation module 232 in Figure 2.

A file reader may invoke this de-encapsulation process to reconstruct the mesh bit-stream. The principle of the de-encapsulation process consists in first successively processing each sample of the Mesh Track to reconstruct the Mesh Segments of the track. Then, each reconstructed Segment is buffered in a Mesh Segment Array and the Segment Table container is then. Finally, the reconstructed Mesh Segments containers and the Segment Table containers are then nested in Mesh Container to finalize the output bit-stream. As a result, when processing one or more ISOBMFF Segments or Fragments, several Mesh bit-streams are generated. A file reader may further apply a concatenation process on the several Mesh bit-streams to form a single Mesh bit-stream as described hereinafter.

As illustrated, a first step is directed to identifying and parsing a sample entry in a track of the media file (step 500). It is then determined whether the sample entry comprises a specific mesh SampleEntry such as a VolumetricMeshSampleEntry (e.g., a *'vmsh'* sample entry). Next, the set of mesh parameters provided in this sample entry are obtained (step 502). This set of parameters are static for all the samples of the track and may be the following:
the version parameter,
timing information such as the number of units of time or ticks per second the number of units of time or ticks per frame (or per sample), and
axis-aligned bounding box coordinates.

All these parameters are stored so as to be used later for generating the Mesh container.

Next, the sample group entries are parsed (step 504) in order to determine the parameters associated with each segment described as a sample (step 506). For example, a mesh segment sample group ('*msg*' sample group) may be parsed to obtain the Bounding Box parameters and optionally the number of mesh frames comprised within the media sample. These items of information are also stored in memory to be used for generating the Segment Table container.

Next, the de-encapsulation process enters a processing loop on each sample described in the metadata track (step 508). The processing loop starts at a predetermined sync sample that can be the first sample of the mesh sequence or any subsequent sample that can be randomly accessed. For each of these samples, the de-encapsulation process extracts the data corresponding to the sample from the media data part of the media file (step 510). The extracted data comprise one segment container. The extracted segment container data are appended in a reconstruction buffer (step 512) that is initially empty. Next, the byte offset of each segment is stored in memory to make it possible to generate the offset from the start of the mesh container to the first and last byte of each segment container that has to be signalled in the Segment Table container. In addition, the composition time of each of the sample (i.e., of each segment container) is stored in a memory to make it possible to compute the timing information associated with each segment in the Segment Table container (step 514). The number of mesh frames and the aligned-axis bounding box parameters associated with the segment are determined from the mesh segment '*msgt*' sample group (obtained in step 506) that is mapped with current sample and stored in memory. The number of extracted segments is also increased and the number of extracted frames is increased by the number of frames present in the segment as provided in the same sample group. At the end of the step 514, the parameters characterizing the segment in the Segment Table container are thus obtained.

After having processed all the samples, the de-encapsulation module generates the Segment Table container (step 516) from the parameters obtained previously (during step 514). It is to be noted that the byte offsets corresponding to the first and last bytes of the segment container determined in 514 are relative to the first byte of the first extracted segment. As a result, they need to be updated by a constant value that is the length in bytes from the Mesh container to the first segment container in the reconstructed bit-stream. Since this constant value depends on the number of segments described in the Segment Table container, this value can be determined during step 516 even if the Mesh container is not already generated. This value is equal to the size of the Segment Table container plus the size of the parameter defined in the Mesh container and plus the size of the Extended Option container that may be provided in setup_units of the sample entry. After being generated, Segment Table container is inserted at the beginning of the reconstruction buffer before all the Segment containers.

Next, the immutable parameters of the Mesh container are extracted from the sample entry determined during step 502 and encoded in the Mesh container (step 518). The mutable parameters that correspond to the number of segments present in the reconstructed mesh bit-stream and the total number of coded frames as computed during step 514 are retrieved from the memory of the de-encapsulation module and encoded in the Mesh container. Next, the data encoded in the reconstruction buffer are extracted and inserted in the Mesh container which finalizes the reconstruction process of the mesh bit-stream.

As a result, the de-encapsulation module generates a conformant mesh bit-stream even if random access is performed and the number of extracted segments is lower than in the original mesh data bit-stream.

### Encapsulation according to a second embodiment

**Figure** 6 illustrates a second example of steps of a process for encapsulating, into a single volumetric track, a mesh data bit-stream forming a set of nested containers, according to some embodiments of the disclosure.

According to the example illustrated in Figure 6, the base container and the inter-frame container are described as samples during encapsulation of a mesh bit-stream. Steps 600 to 608 are similar to steps 300 to 308 of Figure 3, respectively.

Contrary to the encapsulation process illustrated in Figure 3, wherein the parsing process stops at the depth of the segment containers, the content of the segment containers is parsed in the encapsulation process illustrated in Figure 6. As illustrated, the content of the base container (or base frame container) is parsed during step 610 and the content of the inter-frame container is parsed during step 616.

The content of the base container, representing a key frame, is extracted during step 612 and stored in the media data box ('*mdat*' box). The extracted and stored key frame may be signalled as a media sample or as a sync media sample (step 614). Signalling a key frame as a sync media sample makes it possible to use this key frame as an access point for random accessing the mesh sequence. According to some particular embodiments, a sync sample in *'vmsh'* and *'vms1'* tracks may be constrained to contain base frame data and should not contain inter-frame data. A Mesh Track may include a SyncSampleBox to indicate the position of the sync samples. In the case of fragmented files, a Mesh Track may use appropriate sample_flags in the track fragments description to indicate the sync samples (e.g. sample_is_non_sync_sample in TrackRunBox or TrackFragmentHeaderBox) or the default_sample_flags in TrackExtendsBox.

According to some particular embodiments, a sync sample in *'vmsh'* and *'vms1'* tracks may be constrained to contain base frame data and may also contain interframe data. In such a case, a SubSamplelnformationBox may be used to identified the byte ranges corresponding to the base frame data and the byte ranges corresponding to the inter-frame data.

According to some particular embodiments (not illustrated), the whole content of the inter-frame container (e.g., VTXD or LBSD container), parsed during step 616, is described as a media sample. To that end, a mesh frame indication such as '*msfi*' Sample Group may be used to group the inter-frame samples that have more than one frame and to signal the number of frames present in the mapped samples.

According to some other particular embodiments, the inter-frame container is further parsed to extract the data of each inter-frame. To that end, the number of frames present in the inter-frame data may be determined from the inter-frame container and the encapsulating process iterates over all the frames encoded in the inter-frame data (step 918). The data corresponding to each inter-frame are extracted from the InterFrame container and appended consecutively in the media data box ('*mda*' box) of the media file (step 620). The data corresponding to each of these inter-frames are then signalled as a sample (in step 622) that is dependent from the previous sync sample. This dependency may be indicated through a sample group. The coded data present in a sample may then correspond to one Mesh frame. A sample may contain either coded data corresponding to a key frame or coded data corresponding to a single inter-frame as coded in an Interframe container (LBSD or VTXD container).

Still according to some embodiments and to distinguish between the VTXD and LBSD containers, the encapsulation process maps the samples that describe interframe samples predicted using the VTXD compression method in a particular sample group (e.g., '*vtxd*' sample group) and samples predicted using the LBSD compression method in another particular sample group (e.g., *'Ibsd'* sample group). In a variant, the same temporal compressed sample group (e.g., '*tcom*' sample group) is used for both compression methods while describing the type of the compression using a particular flag. For example, when the flag is set to 1, the samples use the LBSD compression and on the contrary, when it is set to 0, they use the VTXD compression.

In yet another variant, the Mesh Segment Information '*msgt*' sample group provides Bounding Box parameters information for one or more samples in a Mesh track. In a Mesh track, all samples should be referenced in one Mesh Segment Information sample group. In other words, the Mesh Segment Information '*msgt*' sample group should be an essential sample group.

For example, the syntax of the Mesh Segment Information '*msgt*' sample group may be the following: 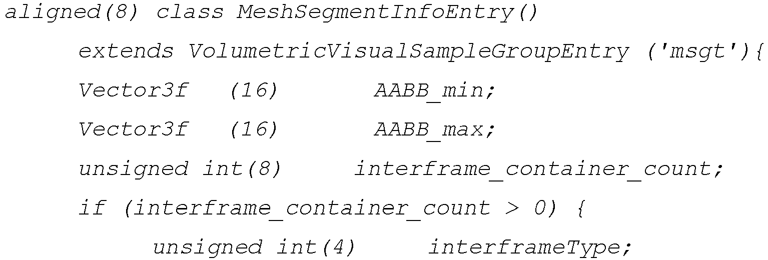 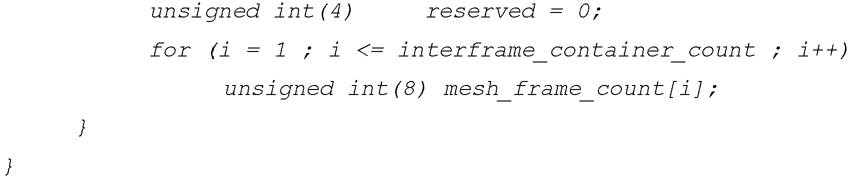 with the following semantics:
*AABB_min* indicates the minimum x, y, and z values of the axis-aligned bounding box coordinates of the box bounding the motion of the mesh vertices or of the considered objects over all the samples mapped to this sample group entry,
*AABB_max* indicates the maximum x, y, and z values of the axis-aligned bounding box coordinates of the box bounding the motion of the mesh vertices or of the considered objects over all the samples mapped to this sample group entry,
*interframe_container_count* is the number of inter-frame containers present in the samples mapped to this sample group entry,
*interframeType* indicates the type of the container used in the segment. For example, when it is set to 0, it indicates that the type is the LBSD container type and when it is set to 1, it indicates that the type is the VTXD container type. Other values are reserved for future use,
*mesh_frame_count[i]* is the number of mesh frames present in the i-th inter-frame container of the sample mapped to this sample group entry. The sum of mesh_frame_count[i] for i in the range of i to interframe_container_count inclusive should be equal to the number of mesh frames present in the sample mapped to this sample group entry minus 1.

When the inter-frame container has a nested container such as a Skinning Data container or a user vertex properties container, it is signalled within the first interframe sample. In a variant, when the nested container provides data specific for each inter-frame, the extraction step (e.g., step 620 in Figure 6) extracts the data pertaining to one inter-frame not only from the inter-frame container but also from the nested container. The data of the inter-frame container is appended first, followed by the data of the nested containers using the same order for all the frames of the mesh sequence.

To distinguish the byte ranges of a sample that corresponds either to the nested container or to the mesh data, a sub-sample information box may be provided in the meta data of the track, wherein the codec_specific_parameter includes one or more bits that indicate the type of the nested container. For example, when the first bit of the codec_specific_parameter is set to 1, it may indicate that the nested container is a Skinning Data container and when the second bit is set to 1, it may indicate that the subsample is mapped into a user vertex properties container.

More precisely, the SubSamplelnformationBox (specified in ISO/IEC 14496-12) in a Mesh track may be used to map byte ranges of a sample to a set of properties as follows:
- the flags value should be set to 0 and other values are reserved for future use,
- the subsample_priority field should be set to a value in accordance with the specification of this field in ISO/IEC 14496-12, and
- the discardable field should be set to 1 only if this sample is still decodable if this sub-sample is discarded (e.g. the sub-sample consists of a user vertex properties).

The codec_specific_parameters fields of the SubSamplelnformationBox may be defined for Mesh-encoding as follows: 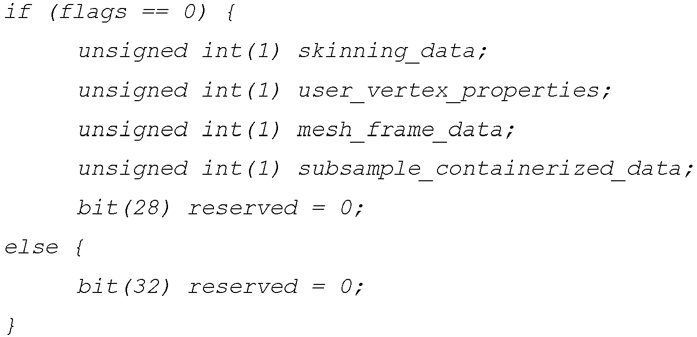 wherein (the values being only provided as examples)
*skinning_data* indicates, when set to 1, that the sub-sample corresponds to Skinning data container,
*user_vertex_properties* indicates, when set to 1, that the sub-sample corresponds to User Vertex Properties Container data,
*mesh_frame_data* indicates, when set to 1, that the sub-sample corresponds to either base frame or inter-frame data,
*subsample_containerized_data* indicates, when set to 1, that the sub-sample contains data that are already in a Mesh bit-stream container and, when set to 0, that the sub-sample contains data that are in not in a Mesh bit-stream container. For example, in step 612 or 620 in Figure 6, the extraction of the data may be done such that the whole container (except the sub-boxes) are extracted (and therefore subsample_containerized_data is set to 1). On the contrary, when the content of the container is extracted the subsample_containerized_data is set to 0.

It is observed that a constraint may be applied so that a subsample has one and exactly one of the skinning_data, user_vertex_properties, and mesh_frame_data set to 1 and the others set 0.

In order to ensure that the content of a sample is fully described, a subsample description may be defined for a sample when at least one of the following sentences is true:
- the sample is in a Mesh track with a value of hasUserVertexProperties equal to 1 in the MeshDecoderConfigurationRecord or
- the sample is contained in a Mesh Segment Information Sample Group with a value of interframe_container_count greater or equal to 1.

According to another embodiment, the key frame and inter-frame samples are mapped by the temporal level 'tele' sample grouping to form two or more temporal levels. The key frames may be grouped in a first level with a level_independently_decodable flag set to 1 (indicating that these samples have no dependencies with other samples) and the inter-frames may be grouped in one or more 'tele' sample group (with a level_independently_decodable flag set to 0). A file reader may select different temporal layers to generate a mesh bit-stream with different frame rates.

According to other embodiments, a multi-track encapsulation is used. In such a case, a first track may describe the inter-frame data while other tracks may describe the nested containers of inter-frame containers such as user vertex properties containers and Skinning data containers. These other tracks may refer to the first track using mesh base track reference (track reference with reference type '*mbas*') to indicate that they further complete the track containing the actual coded data.

According to other embodiments, the multi-track encapsulation may describe the data corresponding to the key frames in a first track and the inter-frames in a second track. The dependency between the second and the first track may be signalled with a mesh base track reference.

According to other embodiments, Texture data may be associated with the mesh for example using UV texture mapping. In that case, the UV coordinates that map the mesh face vertices in the texture images are coded in the base frame data. The texture images may be encoded as a video media that is compressed using video codec. The texture video bit-stream may be encapsulated in the media file as video track. The video track may use a generic restricted sample entry 'resv' and the scheme_type of the SchemeTypeBox of the RestrictedSchemelnfoBox may be for example the 'vmtc' value to indicate that the track comprises a video mesh texture component of the mesh content. The original_format value may further indicate the compression codec used to encode the texture track. It can be for example `vvc1' or `avc1' or 'hvc1'. The Mesh track may use a mesh texture track reference (track reference with reference type 'mttr') to indicate the relation between the Mesh track and the video texture track.

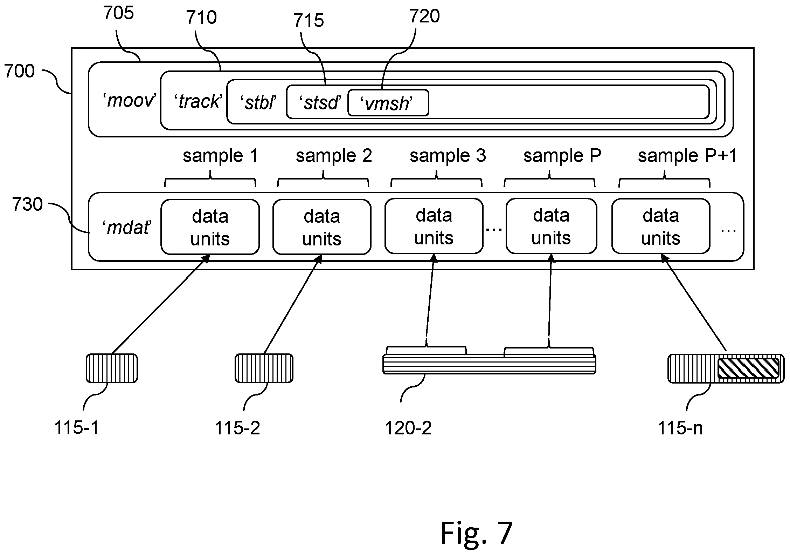

**Figure** 7 illustrates an example of a media file generated by an encapsulation module carrying out the step illustrated in Figure 6 from the mesh bit-stream illustrated in Figure 1.

Media file 700 is similar to media file 400 described with reference to Figure 4. The main difference relies in the definition of the media samples and in the data actually encoded in the '*mdat*' box.

As illustrated, media file 700 contains two parts: the metadata part 705 (the '*moov*' box according to ISOBMFF) and the media data part 730 (for example, the '*mdat*' box according to ISOBMFF). Metadata part 705 describes the samples stored in the media data part 730. Metadata part 705 contains a track 710, e.g., a mesh track, that describes the sample characteristics in the *'stbl'* box. In particular, it comprises a *'vmsh'* sample entry referenced 720 in the SampleDescription box '*stsd*' referenced 715 that signals the immutable parameters of the Mesh container. The SampleTableBox *'stbl'* further comprises the SampleGroupDescriptionBox that may comprise one or more '*msgt*' sample group description entries.

Media data part 730 comprises media samples, each corresponding to one mesh frame that can be either a key frame or an inter-frame. As illustrated, the first sample corresponds to the data of the key frame of base container 115-1 and the second sample corresponds to the data of the key frame of base container 115-2. The third sample corresponds to the data of the first inter-frame of inter-frame container 120-2 and the sample referenced P corresponds to the data of the last inter-frame of inter-frame container 120-2. The sample referenced P+1 corresponds to the data of the key frame of base container 115-n that contains both base frame data but also the associated user vertex properties container. The user vertex properties of the sample P+1 may be mapped in a sub sample information box described in the SampleTableBox (or in a track fragment when the media file is fragmented). According to some embodiments, the subsample description of the sample P+1 may describe a first subsample mesh_frame_data flag set to 1, for the data of the keyframe, and a second subsample with a user_vertex_properties set to 1; since the data of the keyframe is extracted from the base frame data. The value of subsample_containerized_data is set to 1 for the user vertex properties of the sample P+1 since they correspond to the '*uvpb*' box.

### De-encapsulation according to the second embodiment

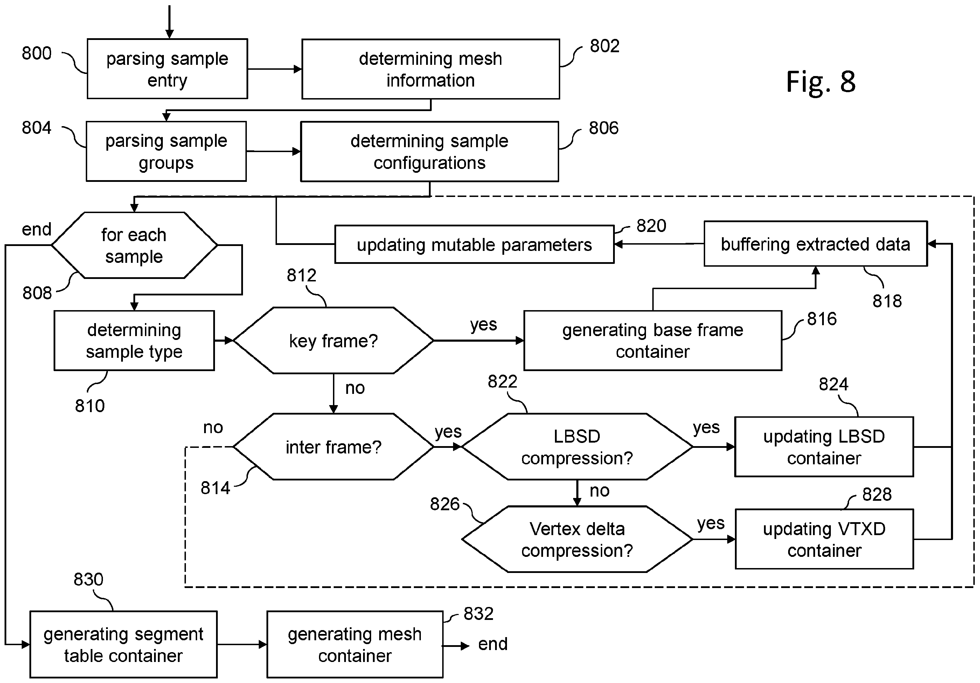

**Figure 8** illustrates a second example of steps of a process for de-encapsulating (or parsing) a media file to generate a mesh data bit-stream forming a set of nested containers, according to some embodiments of the disclosure.

In this embodiment, the de-encapsulation process of the media file generated by the encapsulation process described by reference to Figure 6 is close to the de-encapsulation process described by reference to Figure 5, a difference resulting from the samples that each contains a single frame.

Steps 800 to 808 are similar to steps 500 to 508 in Figure 5.

As illustrated, a first step is directed to identifying and parsing a sample entry in a track of the media file (step 800). It is then determined whether the sample entry comprises a specific mesh SampleEntry such as a VolumetricMeshSampleEntry (e.g., a *'vmsh'* sample entry). Next, the set of mesh parameters provided in this sample entry is obtained (step 802). This set of parameters is static for all the samples of the track and may be the following:
the version parameter,
timing information such as the number of units of time or ticks per second the number of units of time or ticks per frame (or per sample), and
axis-aligned bounding box coordinates.

All these parameters are stored so as to be used later for generating the Mesh container.

Next, the sample group entries are parsed (step 804) in order to determine the parameters associated with each segment described as a sample (step 806). For example, a mesh segment sample group ('*msgt*' sample group) may be parsed to obtain map Bounding Box parameters and optionally the number of mesh frames comprised with the media sample. These items of information are also stored in memory to be used for generating the segment table container.

Next, the de-encapsulation process enters a processing loop on each sample described in the metadata track (step 808) to reconstruct the Mesh Segments of the track. Each reconstructed Segment is buffered in a Mesh Segment Array.

The Mesh Segment Reconstruction process consists in the following as a whole: the file reader generates a new Segment as a container with the '*sgmt*' type when identifying the first keyframe of the Segment (identified by a sync sample). Then, the inter-frames (if any) are added, the samples comprising data from one Mesh Segment corresponding to samples that are mapped to the same Mesh Segment Information sample group description entry. It is noted here that it is a constraint of the media file that the first sample in a Mesh Segment Information sample group is a sync sample (otherwise the file reader should return an error).

This process takes as input one or more samples mapped to a Mesh Segment Information sample group description entry and outputs one Mesh Segment container.

When reconstructing a Mesh Segment of the Mesh track, the following applies for the samples mapped to a Mesh Segment Information sample group description entry, after having determined the type of the considered sample (step 810):
- if the sample is a sync sample (step 812), i.e., if the sample is the first sample of the Sample group description entry, the process continues at step 816 and
- for the other samples, i.e., if the considered sample is mapped in a sample group indicating that temporal compression is used (either VTXD or LBSD compression method) and if the sample contains an inter-frame (step 814), the process continues with the reconstruction of the inter-frame data container, i.e., the process continues at step 824 or 828.

If the sample is determined as a key frame, the sample data are extracted from the media data part according to the sample byte range determined in the Sample Table box. A new Segment container is created with a base frame container and the extracted data are nested within this new Segment container (step 816). The sample data are extracted and encapsulated in a Base frame data (a 'base' box) container when containerized_data is equal to 0. Otherwise (if containerized_data equals 1), the sample data are already stored in a base frame data container. The base frame data container is then nested in the Segment Container. The created Segment container is then buffered (step 818) and the mutable parameters are updated (step 820). Step 820 is similar to step 514 in Figure 5.

The new Segment Container or current Segment Container may be completed with additional inter-frame data in one or more subsequent samples.

The number of inter-frame containers and their types are indicated by the *interframe_container_count* and interframeType of the Mesh Segment Information sample group entry that the sync sample is mapped to.

The reconstruction process also initializes the following variable for the reconstruction process of inter-frame data containers, as follows:
- the index of the current inter-frame data container in the current Mesh Segment container is set equal to 0 and
- the number of process samples (Ns) is set equal to 0.

If the considered sample is determined as an inter-frame (step 814), the type of the compression used for encoding the data of this sample is determined. Determination of the type may be based on the sample group parsed during 804. For the sake of illustration, the compression type may be the LBSD type or the VTXD type. If it is determined that the LBSD compression is used (step 822), the data corresponding to the sample byte range are extracted. If the previous processed sample was not an LBSD inter-frame, a new LBSD container is generated (step 824) with the content of the extracted data. The number of frames present in the LBSD container is set equal to 1. Otherwise, if the previous processed sample was an LBSD inter-frame, the extracted data are appended to the previous LBSD container and the number of frames is increased by one (step 824). Similarly, if it is determined that the VTXD compression is used (step 826), the data corresponding to the sample byte range are extracted. If the previous processed sample was not a VTXD inter-frame, a new VTXD container is generated (step 828) with the content of the extracted data. The number of frames present in the VTXD container is set equal to 1. Otherwise, if the previous processed sample was a VTXD inter-frame, the extracted data are appended to the previous VTXD container and the number of frames is increased by one (step 828).

After having processed the considered sample, the generated inter-frame container is buffered or the inter-frame container previously buffered is updated with the extracted data (step 818) and the mutable parameters are updated (step 820).

The reconstruction process of the inter-frame data container may also be done as follows: the file reader successively generates the Inter-frame data containers. The number of inter-frame containers and their types are indicated by the *interframe_container_count* and interframeType of the Mesh Segment Information sample group entry that the sync sample is mapped to.

The file reader successively processes the samples present in the Mesh segment Information sample group entry starting with the second sample (the first sample being the sync sample and processed according to step 816.

The inter-frame data of the current sample are added to an Inter-frame data container as follows:
- if the number of process samples Ns is equal to 0, a new inter-frame data container is generated (as described hereinafter). Otherwise, the current inter-frame data container is updated (as described hereinafter),
- the number of processed samples Ns is incremented, and
- if the number of processed samples Ns is equal to mesh_frame_count[i] wherein i is the index of the current interframe data container in the current Mesh Segment container
   o the index of the current inter-frame data container is incremented and
   o the number of process samples Ns is set to 0 .

The step of generating a new Interframe container may be defined as follows:
- when containerized_data is set equal 0, the sample data are extracted and encapsulated in an Interframe data container and
- otherwise, when containerized_data is set equal 1, the sample data are already an Interframe data container. Therefore, the Interframe data container is appended in the Segment Container.

The step of updating an Interframe container may be defined as follows:
- when containerized_data is set to 0, the sample data are extracted,
- otherwise, when containerized_data is set to 1, the sample data are an Interframe data container and thus, the inter-frame data are extracted from this container, and
- the existing Interframe data container is updated with the extracted inter-frame data and the number of frames present in the Interframe data container is incremented.

According to some other embodiments, when the sub sampling information (e.g. a SubSamplelnformationBox) indicates that the inter-frame sample includes a Skinning Data container, a new LBSD container is generated at step 824. In such a case, several LBSD containers may be present in the same Segment.

When the sample is associated with a subsample description, the step 816 of generating the base frame container may be the following:
- first, the subsample data with mesh_frame_data set to 1 is considered:
   o if subsample_containerized_data is set to 0, the corresponding byte range (or subsample data) is extracted and encapsulated in a Base frame data (a 'base' box) container and
   o otherwise; if subsample_containerized_data is set to 1, the sample subsample data are already a base frame data container. Therefore, the base frame data container is nested in the Segment Container,
- next, the subsample data with skinning_data set to 1 are considered:
   o if subsample_containerized_data is set to 0, the subsample data are extracted and encapsulated in a Skinning data (a 'skin' box) container and
   o otherwise, if subsample_containerized_data is set to 1, the subsample data are already a Skinning data container. Therefore, the Skinning data container is nested in the Segment Container,
- next, the subsample data with user_vertex_properties set to 1 are considered:
   o if subsample_containerized_data is set to 0, the subsample data are extracted and encapsulated in a User vertex properties (a 'uvpb' box) container and
   o otherwise, if subsample_containerized_data is set to 1, the subsample data are already a User vertex properties container. Therefore, the user vertex property container is nested in the Segment Container.

When the sample is associated with a subsample description, the step of generating the Interframe container may be modified as follows:
- first, the subsample data with mesh_frame_data set to 1 are considered:
   o if subsample_containerized_data is set to 0, the subsample data are extracted and encapsulated in an Interframe data container and
   o otherwise, if subsample_containerized_data is set to 1, the subsample data is already an Interframe data container box. Therefore, the Interframe data container is appended to the Segment Container,
- next, the subsample data with skinning_data equal to 1 are considered:
   o if subsample_containerized_data is set equal 0, the subsample data are extracted and encapsulated in a Skinning data (a 'skin' box) container and
   o otherwise, if subsample_containerized_data is set equal 1, the subsample data are already a Skinning data container. Therefore, the Skinning data container are appended in the Interframe data container,
- next, the subsample data with user_vertex_properties equal to 1 are considered:
   o if subsample_containerized_data is set to 0, the subsample data are extracted and encapsulated in a User vertex properties (a '*uvpd*' box) container and
   o otherwise, if subsample_containerized_data is set to 1, the subsample data are already a User vertex properties container. Therefore, the user vertex property container is appended in the Interframe data container.

Likewise, when the sample is associated with a subsample description, the step of updating the Interframe container may be modified as follows:
- first, the subsample data with mesh_frame_data equal to 1 are considered:
   o if subsample_containerized_data is set to 0, the subsample data are extracted and added in the Interframe data container box,
   o otherwise, if subsample_containerized_data is set to 1, the sample data are already an Interframe data container box. Therefore, the Interframe data from the Interframe data container are extracted and added to the existing Interframe data container, and
   o the number of frames present in the interframe data container is incremented,
next, the subsample data with user_vertex_properties equal to 1 are considered:
o if subsample_containerized_data is set equal 0, the subsample data are extracted and appended to the existing User vertex properties container of the existing Interframe data container,
o otherwise, if subsample_containerized_data is set equal 1, the sample data are a User vertex properties container. Therefore, the user vertex property data are extracted from the container and appended in the existing User vertex properties container of the existing Interframe data container, and
o the number of frames present in the user vertex properties container is incremented.

After having processed all the samples, the de-encapsulation module generates the segment table container (step 530) from the parameters obtained previously (during step 820) and the immutable parameters of the Mesh container are extracted from the sample entry determined during step 802 and encoded in the Mesh container (step 832).

The Mesh Segment table container ('*segt*') is created based on the set of concatenated reconstructed Mesh Segment containers.

The following process applies to determine the parameters needed to compute the Segment Table parameters for each Segment:
- the first and last bytes of the considered Segment container relatively to the first byte of the first Segment container are generated from the set of concatenated reconstructed Mesh Segment containers. These byte offsets are then incremented by a value corresponding to the size of the Segment Table container plus the size of the parameter defined in the Mesh Container plus the size of the Extended Option container in order that these offsets are relative to the first byte of the Mesh container. In the Mesh encoding format, these parameters correspond to start_byte and end_byte parameters of the 'segt' container,
- in addition, the Composition Time of the first and last samples associated with the Segment container is retrieved. In the Mesh encoding format, these parameters correspond to start_tick and end_tick parameters of the 'segt' container,
- the bounding box parameters and the number of mesh frames associated with the Segment container are retrieved from the Mesh Segment Information sample group. In the Mesh encoding format, these parameters correspond to AABB_min, AABB_max, and frame_count parameters of the 'segt' container, and
- finally, the file reader updates the SegmentTable ('*segt'* box) for each the concatenated reconstructed Mesh Segment containers.

As a result, the de-encapsulation module generates a conformant mesh bit-stream even if random access is performed and the number of extracted segments is lower than in the original mesh data bit-stream.

The Mesh container ('*mesh*') reconstruction process consists as a whole in the following:
- generating the parameters of the Mesh container using the version, ticks_per_seconds, ticks_per_sample, AABB_min, AABB_max, and option_flags parameters of the MeshDecoderConfigurationRecord. In the Mesh encoding format, they correspond to parameters with the same naming,
- setting the number of segments that is equal to the number of reconstructed Mesh Segment containers and setting the total number of mesh frames that is equal to the sum of the number of interframe plus 1 within each Mesh Segment container i.e. the sum of the (mesh_frame_count[i]+1) for each Segment "i" contained in the list of reconstructed Mesh Segment container., and
- retrieving and inserting, before the Segment Table container, the setup units ('*xop*' box) present in the MeshDecoderConfigurationRecord.

An additional and optional reconstruction may be triggered when the file reader processes ISOBMFF fragments or ISOBMFF segments. The reconstruction process of the Mesh bitstream is successively applied onto each fragment or segment. In this case, a Mesh bit-stream concatenation process may be used as post processing stage to generate a single conformant Mesh bitstream.

The processing consists in initializing the output bitstream with the first generated Mesh bitstream. Next, for each of the remaining Mesh bit-streams the following applies:
- the value of the number of segments and the total number of mesh frames defined in the Mesh container of the output bit-stream is incremented by the same parameter values defined in the remaining Mesh bitstream's Mesh container,
- the Segment table Container data of the remaining Mesh bit-stream is concatenated to the Segment Table container of the output bitstream, and
- the Segment containers of the remaining Mesh bitstream are appended to the Mesh Segment containers of the output bitstream.

According to other embodiments, the bit-stream to be encapsulated is a volumetric data bit-stream comprising coded volumetric data representing a sequence (also referred to as a volumetric sequence or a media sequence) of one or more frames (also referred to as volumetric frames). In other words, the Mesh data bit-stream described in the previous examples is replaced by a volumetric data bit-stream, for example a Mesh data bit-stream encoding only geometry (i.e. vertices positions and optional normals) for the mesh, not any connectivity (the mesh faces for example the triangles) being present. In such a case, the Mesh data bit-stream may be referred to as to Volumetric or Point Cloud data bit-stream. It comprises vertices or points coordinates associated with optional attributes such as normals or the color of the points. In such a case, the topology of the mesh may be considered as stable when the number of vertices is constant. According to these embodiments, the volumetric data bit-stream (also denoted volumetric bit-stream or, in some particular cases, Mesh bit-stream) may comply with a Volumetric or Point Cloud encoding format and the corresponding volumetric data are encoded in a nested set collection of containers (or also referred to as volumetric containers). For example, the containers may describe coding parameters that apply to either the complete volumetric sequence, a group of frames of the volumetric sequence, or one volumetric frame. A container starts with a 4CC (four-character code) parameter that signals the type of the container, that is followed by a size parameter signaling the length of the data coded in the container. A container may contain other boxes. In such a case, the size of the container includes the length of all the contained or nested boxes.

Still for the sake of illustration, a topmost container (e.g., a Volumetric container) may describe general header information that applies to the whole media sequence. This topmost container aggregates one or more containers (or boxes or sub-boxes) that further encode the Volumetric frames, for instance a segment of coded volumetric data, the segment of coded volumetric data comprising a sequence of one or more frames, into nested containers. Similarly to the mesh encoding format, base frame and interframe containers may be used with temporal compression methods for example the Vertex Delta encoding or the LBSD. The temporal compression method may be more efficient when the number of vertices is constant and when the displacement of each point between two frames is limited (i.e. when the norm of the displacement is lower than a predetermined value for example equal to the average distance (or in a variant the minimal distance) between any two points of the mesh). In such a case, the topology of the Volumetric data may be considered as the same or as stable.

A VolumetricNestedContainerSampleEntry sample entry may describe a track comprising samples of a Volumetric bit-stream composed of a set of nested containers. The Sample Entry type may be for example the '*vnsc*' type or the *'vns1'* type. A main difference between these two types is that the setup units of a 'vns1' sample entry contain all the configuration parameters' containers (for example the Extended Option container), i.e. they are not present in the samples of the track.

The VolumetricNestedContainerSampleEntry may contain a VolumetricNestedContainerConfigurationBox (for instance, with a four-character code type '*vnsC*') that carries configuration record for the Volumetric bit-stream. The configuration record may contain parameters that are immutable for all the Segments of the Volumetric bit-stream. The parameters defined for the MeshDecoderConfigurationRecord may be present in the configuration record for the Volumetric bit-stream. For example, it may include some or all of the following items of information
- a version number;
- timing information such as the number of ticks per sample or the number of ticks per second;
- Bounding box parameters that represent the box bounding the motion of the vertices of the Volumetric sequence;
- option flags describing the encoding configuration used for compressing the Volumetric data;
- a flag signalling whether user vertex properties or attributes are signalled;
- a parameter indicating whether the samples contain data that are already encapsulated in Volumetric bit-stream container; and
- possibly zero or more Volumetric bit-stream containers as-is (setup units) that apply to segments of sequence.

In a first variant, the VolumetricNestedContainerSampleEntry embeds a VolumetricNestedContainerConfigurationBox comprising a MeshDecoderConfigurationRecord with an additional parameter that indicates whether the Track includes connectivity data or not. As a result, a Track described with a VolumetricNestedContainerSampleEntry may apply to several types of Volumetric content including Mesh or Point Cloud contents, i.e. in other words, including Mesh content comprising connectivity data or Point Cloud content not comprising connectivity data.

In a second variant, the VolumetricNestedContainerSampleEntry sample entry comprises a configuration box including a configuration record with the same parameters as the MeshDecoderConfigurationRecord and is inferred to apply only to Volumetric bit-streams that do not specify connectivity information in the bit-stream (for example point cloud content).

The same encapsulation and de-encapsulation processes as the ones described for Mesh data bit-stream, so as to store top-level containers' parameters of the bit-stream in a metadata part of a track and low-level containers' data in a data part, may be applied to any Volumetric content using the VolumetricNestedContainerSampleEntry. In such a case, a VolumetricSegmentlnfoEntry sample group may be used with the same purpose as for the MeshSegmentlnfoEntry sample group but for a Volumetric bit-stream represented by a set of nested data containers. For example, the VolumetricSegmentlnfoEntry syntax may include the same or a subset of MeshSegmentlnfoEntry parameters while using the same semantics. Similarly, the SubSamplelnformationBox in a Volumetric Nested Container Track may map byte ranges of a sample to the same properties as defined for a Mesh track in the previous embodiments.

According to other embodiments, the encapsulation process may indicate the size of each container data stored in media data. Each container data are preceded by a containerSize field indicating the size of the container data that follow. This field may indicate the length of the container data that follow, in bits (or in one alternative in bytes). As a result, the samples of the media data part (mdat) are stored as a list of one or more couples of a first field indicating the length of container data and a second field representing the actual data of the container.

The length of the field indicating the size of each container data stored in the media data part of the media file may be indicated in the decoder configuration of a Mesh or Volumetric track of one of the sample entries of the track. For example, the MeshDecoderConfigurationRecord may comprise a containerSizeLengthMinusOne syntax element coded as an unsigned integer, e.g., an unsigned integer coded on 8 bits (int(8)). For example, the semantic of this additional parameter may be the following: containerSizeLengthMinusOne plus one specifies the length (in bytes) of the containerSize field present before each container data stored in the media data track.

The encapsulation process described with reference to Figures 3 and 6 includes an additional processing stage in step 302 and/or step 602 that consists in signaling the containerSizeLengthMinusOne in the decoder configuration of the sample entry. For example, the encapsulation process may use a value of containerSizeLengthMinusOne equal to 3 to indicate container data of size up to 2^32 bits. In addition, steps 310 or 612 and 620 may signal the size of the data extracted and stored in the media data part (mdat) by signaling a parameter prior to the extracted data stored in the media data. The length of the inserted size parameter is equal to the value of containerSizeLengthMinusOne plus one.

The decapsulation process may use the containerSizeLengthMinusOne parameter signaled in the decoder configuration of Mesh or Volumetric Track to be able to parse the containerSize fields present in the media data part. As a result, in step 510 or 818, the decapsulation process may determine in advance the size of each container data which make the parsing of the media data part (mdat) easier and may allow a decapsulation process extracting the container of samples without having to use the subsample description associated with the sample of the Mesh or Volumetric Track.

### Hardware for carrying out the steps of some embodiments of the disclosure

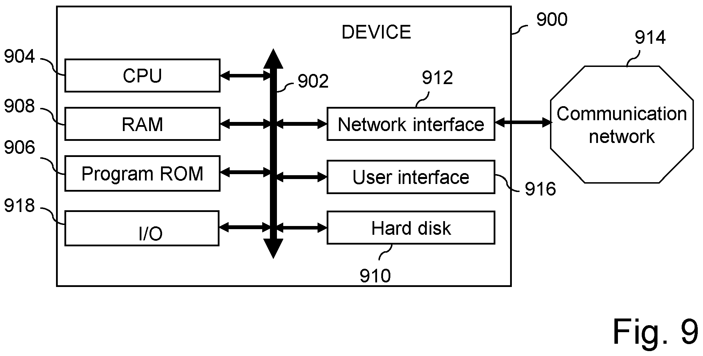

**Figure 9** is a schematic block diagram of a computing device 900 for implementation of one or more embodiments of the disclosure. The computing device 900 may be a device such as a micro-computer, a workstation, or a light portable device. The computing device 900 comprises a communication bus 902 connected to:
- a central processing unit (CPU) 904, such as a microprocessor;
- a random access memory (RAM) 908 for storing the executable code of the method of embodiments of the disclosure as well as the registers adapted to record variables and parameters necessary for implementing the method for encapsulating, indexing, de-encapsulating, and/or accessing data, the memory capacity thereof can be expanded by an optional RAM connected to an expansion port for example;
- a read only memory (ROM) 906 for storing computer programs for implementing embodiments of the disclosure;
- a network interface 912 that is, in turn, typically connected to a communication network 914 over which digital data to be processed are transmitted or received. The network interface 912 can be a single network interface, or composed of a set of different network interfaces (for instance wired and wireless interfaces, or different kinds of wired or wireless interfaces). Data are written to the network interface for transmission or are read from the network interface for reception under the control of the software application running in the CPU 904;
- a user interface (Ul) 916 for receiving inputs from a user or to display information to a user;
- a hard disk (HD) 910; and/or
- an I/O module 918 for receiving/sending data from/to external devices such as a video source or display.

The executable code may be stored either in read only memory 906, on the hard disk 910 or on a removable digital medium for example such as a disk. According to a variant, the executable code of the programs can be received by means of a communication network, via the network interface 912, in order to be stored in one of the storage means of the communication device 900, such as the hard disk 910, before being executed.

The central processing unit 904 is adapted to control and direct the execution of the instructions or portions of software code of the program or programs according to embodiments of the disclosure, which instructions are stored in one of the aforementioned storage means. After powering on, the CPU 904 is capable of executing instructions from main RAM memory 908 relating to a software application after those instructions have been loaded from the program ROM 906 or the hard-disc (HD) 910 for example. Such a software application, when executed by the CPU 904, causes the steps of the flowcharts shown in the previous figures to be performed.

In this embodiment, the apparatus is a programmable apparatus which uses software to implement the disclosure. However, alternatively, the present disclosure may be implemented in hardware (for example, in the form of an Application Specific Integrated Circuit or ASIC).

Although the present disclosure has been described herein above with reference to specific embodiments, the present disclosure is not limited to the specific embodiments, and modifications will be apparent to a person skilled in the art which lie within the scope of the present disclosure.

Many further modifications and variations will suggest themselves to those versed in the art upon making reference to the foregoing illustrative embodiments, which are given by way of example only and which are not intended to limit the scope of the disclosure, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of generating a volumetric data bit-stream from an ISOBMFF-based media file, the method comprising:
obtaining, from the media file, a track comprising at least one parameter in a metadata part of the track, the at least one parameter applying to the whole volumetric data bit-stream, the track further comprising at least one sample, a data part of the at least one sample comprising coded volumetric data of at least one frame of a sequence of one or more frames, the sequence of one or more frames pertaining to a segment of coded volumetric data;
generating, from at least one sample, a first data container comprising the segment, the segment comprising the coded volumetric data of all the frames of the sequence of one or more frames;
generating a second data container containing the at least one parameter and the generated first data container and;
generating the volumetric data bit-stream, the volumetric data bit-stream comprising the second data container.

2. The method according to claim 1, wherein the coded volumetric data of at least one frame of the sequence of one or more frames comprises a key frame containing geometry information and/or comprises at least one inter-frame.

3. The method according to claim 1 or claim 2, wherein the volumetric data bit-stream comprises coded mesh data.

4. The method according to claim 2, the coded volumetric data of at least one frame of the sequence of one or more frames comprises at least one inter-frame and wherein the first data container comprises an indication of a volumetric encoding format of the at least one inter-frame, the indication being generated from the metadata part of the track.

5. The method according to any one of claims 1 to 4, further comprising:
generating a third data container comprising the coded volumetric data of at least one frame of the sequence of one or more frames, the third data container being contained in the first data container.

6. The method according to claim 4, further comprising:
generating a third data container comprising the coded volumetric data of at least one frame of the sequence of one or more frames, the third data container being contained in the first data container
wherein the third data container comprises the indication of the volumetric encoding format of the at least one inter-frame.

7. The method according to any one of claims 1 to 6, wherein the at least one sample comprises the coded volumetric data of all the frames of the sequence of one or more frames.

8. The method according to claim 5 or claim 6, wherein generating the third data container comprises obtaining data indicating
the type of each frame of the sequence of one or more frames in a sample and/or
a number of frames in the sequence of one or more frames in a sample,
the indicating data being obtained from subsample information of the metadata part of the track.

9. The method according to any one of claims 1 to 8, wherein generating the first data container further comprises obtaining, from a sample of another track, coded volumetric data corresponding to user vertex properties or further comprises obtaining, from a sample of another track, coded volumetric data corresponding to vertex skinning data.

10. The method according to any one of claims 1 to 9, wherein the at least one parameter applying to the whole volumetric data bit-stream is determined from a sample entry of the track and/or wherein at least one parameter applying to a plurality of samples is determined from a sample group of the track.

11. A method of encapsulating a volumetric data bit-stream into an ISOBMFF-based media file, the method comprising
obtaining, from the volumetric data bit-stream, a first data container containing at least one parameter applying to the whole volumetric data bit-stream and containing a second data container comprising a segment of coded volumetric data, the segment of coded volumetric data comprising a sequence of one or more frames;
obtaining the at least one parameter from the first data container;
obtaining coded volumetric data of at least one frame of the sequence of one or more frames from the second data container;
generating a track comprising the at least one parameter in a metadata part of the track and comprising at least one sample, a data part of the at least one sample comprising coded volumetric data of at least one frame of the sequence of one or more frames; and
encapsulating the generated track in the media file.

12. The method according to claim 11, wherein the data part of the at least one sample comprises a key frame containing geometry information and/or comprises at least one inter-frame.

13. The method according to claim 11 or claim 12, wherein the volumetric data bit-stream comprises coded mesh data.

14. The method according to claim 12, wherein the data part of the at least one sample comprises at least one inter-frame and wherein the metadata part of the track further comprises an indication of a volumetric encoding format of the at least one inter-frame.

15. The method according to any one of claims 11 to 14, further comprising obtaining the coded volumetric data of the at least one frame of the sequence of one or more frames from a third data container of the volumetric data bit-stream, the third data container being contained in the second data container.

16. The method according to claim 15, wherein the third data container comprises the indication of the volumetric encoding format of the at least one inter-frame.

17. The method according to any one of claims 11 to 16, wherein the data part of the at least one sample comprises coded volumetric data of all the frames of the sequence of one or more frames.

18. The method according to claim 17, wherein the track further comprises subsample information in the metadata part, the subsample information describing at least one of the following:
a type of each frame of the sequence of one or more frames in a sample and
a number of frames in the sequence of one or more frames in a sample.

19. The method according to any of claims 11 to 18, wherein the segment of coded volumetric data further comprises user vertex properties and the user vertex properties are encapsulated in a sample of another track and/or further comprises vertex skinning data and the vertex skinning data are encapsulated in a sample of another track.

20. The method according to any of claims 11 to 19, wherein the at least one parameter applying to the whole volumetric data bit-stream is encoded in a sample entry of the track and/or wherein at least one parameter applying to a plurality of samples is encoded in a sample group of the track.

21. A computer program product for a programmable apparatus, the computer program product comprising instructions for carrying out each step of the method according to any one of claims 1 to 20 when the program is loaded and executed by a programmable apparatus.

22. A processing device comprising a processing unit configured for carrying out each step of the method according to any one of claims 1 to 20.
